Europäisches Patentamt

European Patent Office

Office européen des brevets

(19)

(11) Publication number: **0 038 197**
**B1**

(12) **EUROPEAN PATENT SPECIFICATION**

(45) Date of publication of patent specification: **02.04.86**

(51) Int. Cl.⁴: **B 60 B 33/02**

(21) Application number: **81301597.1**

(22) Date of filing: **10.04.81**

(54) **Dual wheel caster assembly.**

(30) Priority: **14.04.80 US 140120**

(43) Date of publication of application:
**21.10.81 Bulletin 81/42**

(45) Publication of the grant of the patent:
**02.04.86 Bulletin 86/14**

(84) Designated Contracting States:
**NL**

(56) References cited:
**DE-A-2 461 179**
**FR-A-1 441 833**
**GB-A-1 510 207**

(73) Proprietor: **STEWART-WARNER CORPORATION**
**1826 West Diversey**
**Chicago Illinois 60614 (US)**

(72) Inventor: **Forte, Francis J.**
**26, Cloverdale**
**Huntington Connecticut 06484 (US)**

(74) Representative: **Baillie, Iain Cameron**
**c/o Ladas & Parry Isartorplatz 5**
**D-8000 München 2 (DE)**

Courier Press, Leamington Spa, England.

## Description

The invention concerns a dual wheel caster assembly.

Dual wheel casters have found considerable acceptance in recent years for supporting such items as office equipment and furniture. Their success is a result of a combination of factors including the increased load capacity of the dual wheel construction, which permits the caster to be made from less expensive materials. An additional advantage in the dual wheel caster design is that they swivel more readily than single wheel casters because the wheels have the capacity to rotate in opposite directions as the caster pivots.

In many cases it has been found desirable to provide brakes for dual wheel caster assemblies, particularly in casters used for supporting office equipment that is normally stationary. Many types of brakes have been devised in the past for locking caster wheels to brake horns or bases, but most of these have been specifically designed for single wheel casters. In one type of single wheel caster brake, a plate is mounted on the main wheel axle for pivotal movement and it has a cam surface that axially engages and binds against and locks the wheel of the caster. Another type of single wheel caster brake includes a pivotally mounted number on the horn that wedges against the outer tread surface of the wheel and frictionally locks the wheel to the horn.

These, and other brake assemblies, are adequate for single wheel caster assemblies but they are not particularly suitable for dual wheel caster assemblies because the wheels in dual wheel caster constructions are spaced quite far apart and adapting a single wheel type of braking mechanism for both wheels would result in not only a complicated brake construction, but also one which would detract from the aesthetic appearance of the caster which is important in today's modern office environment.

There has been one dual wheel caster assembly that has been modified to accommodate a brake that frictionally engages and locks, or attempts to lock both wheels of the caster. This prior construction utilizes a bracket carrying brake shoes that extend axially over the outer surface of the wheels. The brake is actuated by a camming lever mounted centrally in the horn and deactuated by a return spring in the horn. This brake assembly has the primary disadvantage that it can only be used in horn assemblies that have hoods that cover the periphery of the wheels since otherwise the brake shoes would be visible and detract from the appearance of the caster. Another disadvantage in this construction is that the braking force is controlled by the position of the braking lever and thus subject to human error in positioning of the lever, and it is also subject to the inadvertent release of the brake by bumping the lever or even vibration of the equipment supported on the casters.

Relevant examples of the prior art include GB—A—1 510 207 and DE—A—2 461 179 both of which show dual wheel casters with braking or retarding mechanisms that act on both of the wheels. The braking mechanisms are rigid, however, in the sense that the braking elements move precisely in unison and when one engages, the other stops. If the wheel brake surfaces are out of alignment only one wheel will brake.

The present dual wheel brake obviates this problem by spring biasing a frame for both brakes in a way to equally distribute braking force between the wheels.

According to the present invention there is provided a dual wheel caster assembly having a horn member adapted to be connected to an article to be supported, and a pair of wheels rotatably connected one to each side of the horn member with an outer tread surface and an annular surface radially inwardly of the tread surface, characterized by a brake assembly for locking the wheels to the horn member including a brake shoe bracket reciprocably mounted for radial movement in the horn member, first and second brake shoes carried by the brake shoe bracket selectively engageable with the annular surfaces on the wheels, spring means in the horn member biasing the bracket in a direction engaging the first and second brake shoes with the annular surfaces on the wheels, the arrangement of the bracket and spring means being such that braking force is equally distributed between the wheels regardless of rim wear or shape, and lever means in the horn member for shifting the brake shoe bracket against the biasing force of the spring means. Optional features of the present invention are defined in claims 2 to 5 below.

This brake assembly has the primary advantages that the braking force is controlled and determined entirely by the force of the coil compression spring and it may not be inadvertently released by bumping from a foreign object or by vibration of the associated supported equipment. An additional and very important advantage is that the brake assembly does not require any redesign of the outer configuration of the horn or wheels, with the exception of the pivotal deactuating lever, a feature which is important in the modern office environment. Moreover the brake assembly is usable equally on casters having horns with or without hoods that cover the wheels.

In the drawings:

Fig. 1 is a perspective view of the present dual wheel caster assembly with spring loaded brake;

Fig. 2 is a partly fragmentary side view illustrating the brake assembly in an actuated position;

Fig. 3 is a cross-section taken generally along line 3—3 of Fig. 1 illustrating the brake assembly in an actuated position;

Fig. 4 is a fragmentary section taken generally along line 3—3 of Fig. 3;

Fig. 5 is a side view of the caster assembly according to the present invention similar to Fig. 2 with the brake assembly shown in its deactuated position;

Fig. 6 is a cross-section similar to Fig. 3 with the brake assembly shown in its deactuated position;

Fig. 7 is a fragmentary section taken generally along line 7—7 of Fig. 6;

Fig. 8 is a longitudinal section taken generally along line 8—8 of Fig. 7; and

Fig. 9 is a longitudinal section taken generally along line 9—9 of Fig. 7 illustrating the rear side of the brake shoe bracket.

Referring to the drawings, the present caster assembly 10 is seen to generally include a hoodless central horn 11 that rotatably carries wheels 12 and 13 at either side thereof and has a vertical pintle assembly 15 projecting upwardly for insertion into cooperating elements carried by this office equipment, furniture or other article to be supported. While horn 11 is a hoodless horn, it should be understood that the principles of the present invention apply equally well to horns having hoods that partly or completely cover the periphery of the wheels 12 and 13.

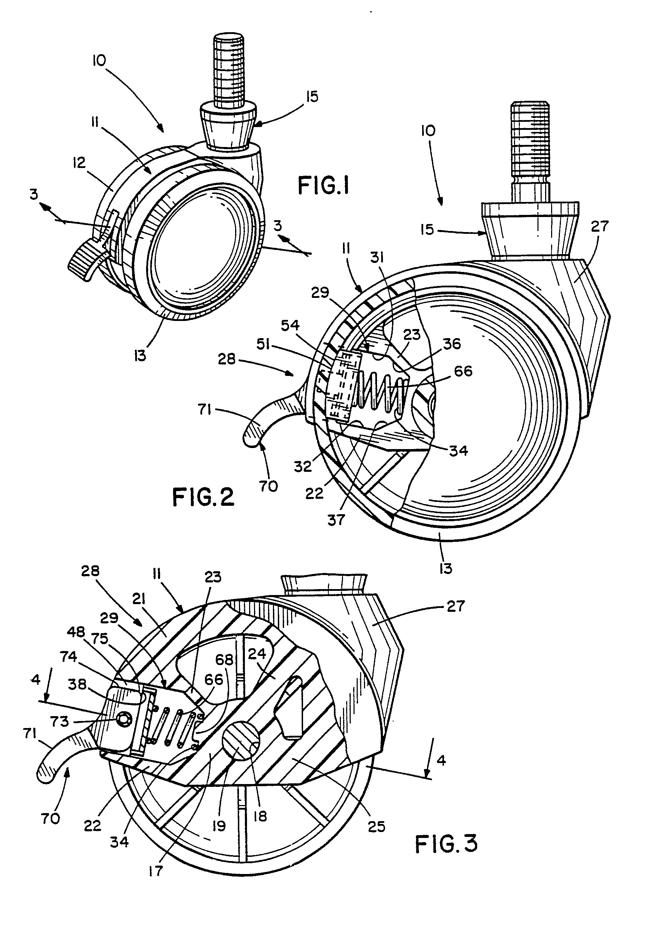

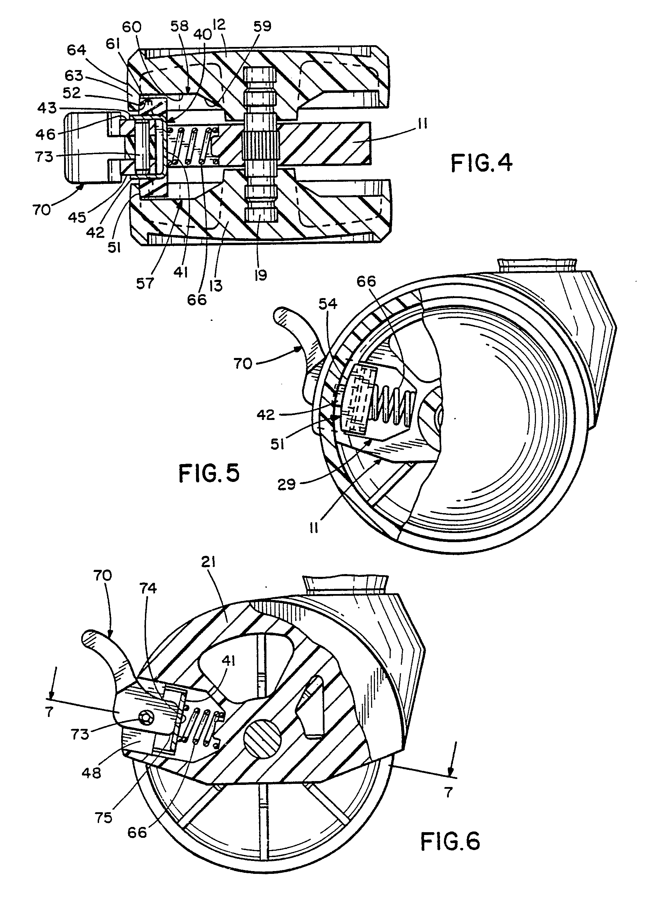

As seen in Figs. 2 and 3, the horn 11 is a one piece molding that has a central hub portion 17 with a central bore 18 that receives an axle 19 in nonrotatable relationship. As seen in Fig. 4, the axle 19 projects on both sides of horn 11 and rotatably receives and supports the wheels 12 and 13. The wheels 12 and 13 have central closed end bores with integral annular detents permitting the wheels to be snapped onto the ends of the axle 19 and locked axially thereto. The central hub 17 of the horn 11 is interconnected to arcuate peripheral portion 21 by integral spoke portions 22, 23, 24 and 25. Horn 11 has an integral boss portion 27 with a vertical closed ended bore therein (not shown) that receives the pintle assembly 15.

According to the present invention, a spring loaded brake assembly 28 is provided for the caster 10 and is seen to include a radially extending slot 29 in the horn completely axially therethrough and defined by side surfaces 31 and 32 connected to an inner surface 34 by generally radial tapered surfaces 36 and 37, and outer surfaces 38.

A generally U-shaped brake shoe bracket 40 is mounted for radial movement in slot 29 and as seen in Fig. 4, it includes a base portion 41 and upstanding leg portions 42 and 43 that flank and are guided by side surfaces 45 and 46 on periphery portion 48 of the horn 11.

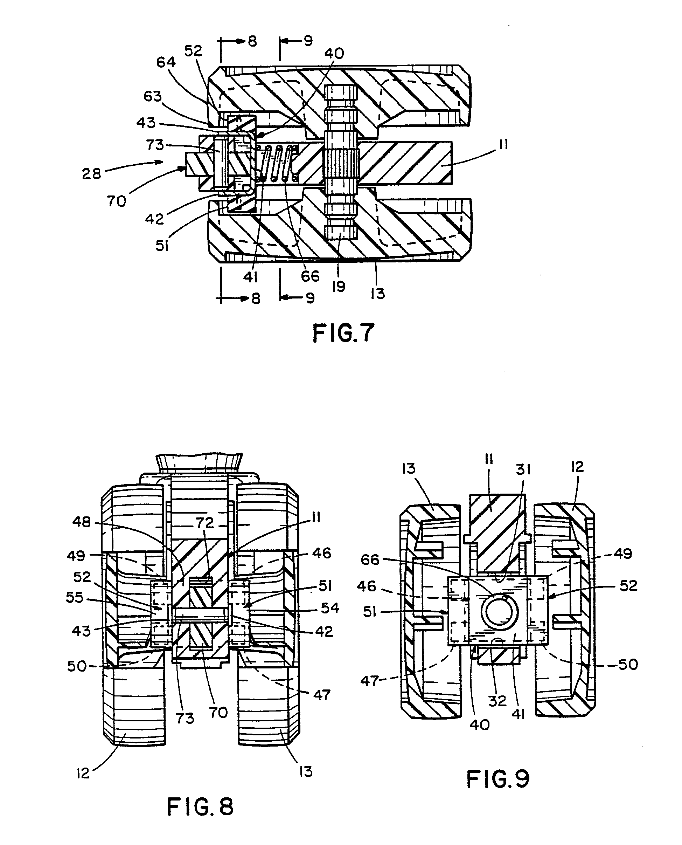

As seen more clearly in Figs. 8 and 9, bracket 40 has outwardly projecting tabs 46 and 47 flanking leg 42 and outwardly projecting tabs 49 and 50 flanking tab 43.

A rubber brake shoe 51 is molded around tabs 46 and 47, and an identical rubber brake shoe 52 is molded around tabs 49 and 50. The brake shoes 51 and 52 have arcuate brake surfaces 54 and 55.

As seen in Figs. 4 and 7, the wheels 12 and 13 are identical and they each have annular recesses 57 and 58 in each of the integral wheel spokes, facing the horn 11 and defined by frustoconical surface 59, flat annular radial surface 60 and an annular cylindrical drum surface 61. The recesses 57 and 58 define an overhanging annular rim lip 63 on tread 64 of each of the wheels 12 and 13. The brake shoes 51 and 52 engage the drum surfaces 61 to lock the wheels 12 and 13 to the horn.

The brake assembly 28 is actuated by a coil compression spring 66 mounted in slot 29. Spring 66 is retained on slot surface 34 by an integral radial projection 68 thereon, and the other end of the spring engages the back surface of the brake shoe bracket base portion 41, biasing the entire bracket and brake shoes 51 and 52 radially outwardly.

A brake release lever 70 is provided for releasing the brake shoes 51 and 52 from engagement with the wheel drum surfaces 61. Lever 70 has an arcuate tab portion 71 to facilitate brake actuation and release by the operator's foot. As seen in Figs. 3, 4, 7 and 8, the lever 70 is carried in a rectangular slot 72 in the peripheral portion 48 of the horn 11 and is pivotally mounted therein by a pin 73 pressed into the horn peripheral portion 48. Lever 70 has a flat cam portion 74 connected to a curved cam portion 75 that engage the brake shoe bracket portion 41 as lever 70 is pivoted in a clockwise direction from its position shown in Fig. 3 to its position shown in Fig. 6, shifting the bracket 40 radially inwardly and disengaging the brake shoes 51 and 52 from the cooperating drum surfaces 61 on the wheels 12 and 13. The flat cam portion 74 on the lever engages the bracket in the Fig. 6 position holding the bracket in its disengaged position with the brake shoes 51 and 52 out of contact with drum surfaces 61. This action compresses spring 66 and stores energy in the spring for the subsequent actuation of the brake 28.

In operation, and with the brake 28 disengaged as seen in Figs. 5, 6 and 7, the operator depresses lever 70 by foot in a counterclockwise direction to its position shown in Figs. 2 and 3. This action completely releases the bracket 40 from the cam surfaces of lever 70, permitting the energy stored in the coil compression spring 66 to rapidly snap the bracket 40 radially outwardly and the brake shoes 51 and 52 carried thereby into engagement with the wheel cylindrical drum surfaces 61. This locks the wheels 12 and 13 to the horn 11 immobilizing the article supported by the caster.

The braking force of the brake assembly 28 can be accurately and easily controlled by the appropriate selection of the coil compression spring 66 since only this spring controls the effective braking force. Because lever 70 is completely free of the bracket 40 when the brake is in the engaged position as seen in Figs. 3 and 4, the inadvertent bumping of the lever 70 or vibration of the supported article cannot cause the inadvertent release of the brake. It may be readily seen from Figs. 4 and 7, that the horn 11 could be provided with a hood extending axially outwardly from the horn and covering the wheels 12 and 13, if desired, without altering the configuration of the horn or hood in any way.

## Claims

1. A dual wheel caster assembly (10) having a horn member (11) adapted to be connected to an article to be supported, and a pair of wheels (12, 13) rotatably connected one to each side of the horn member with an outer tread surface (64) and an annular surface (61) radially inwardly of the tread surface, characterized by a brake assembly (28) for locking the wheels (12, 13) to the horn member (11) including a brake shoe bracket (40) reciprocably mounted for radial movement in the horn member, first and second brake shoes (51, 52) carried by the brake shoe bracket selectively engageable with the annular surfaces (61) on the wheels (12, 13), spring means (66) in the horn member biasing the bracket in a direction engaging the first and second brake shoes (51, 52) with the annular surfaces (61) on the wheels (12, 13), the arrangement of the bracket and spring means being such that braking force is equally distributed between the wheels regardless of rim wear or shape, and lever means (70) in the horn member for shifting the brake shoe bracket against the biasing force of the spring means.

2. The caster assembly of claim 1, characterized in that the spring means (66) biases the brake shoe bracket (40) in a radially outward direction, and the lever means (70) shifts the brake shoe bracket in a radially inwardly direction.

3. The caster assembly of claim 1 or 2, characterized in that the annular surface (61) on each of the wheels (12, 13) is an annular radially inwardly facing surface, said spring means (66) being positioned in a radial slot (29) in the horn member (11) to engage the brake shoes (51, 52) against the wheel annular surfaces, and said lever means (70) being position to release the brake shoes from the wheel annular surfaces.

4. The caster assembly of claim 1, characterized in that the brake shoe bracket (40) is U-shaped in configuration with the legs (42, 43) thereof extending radially outwardly.

5. The caster assembly of claim 4, characterized in the radial slot (29) being formed in the horn member (11) terminating short of the periphery of the horn member, the U-shaped bracket being slidably mounted in the slot (29) and carrying the spaced apart outwardly facing brake shoes (51, 52), the spring (66) placed in the slot (29) in the horn member (11) and biasing the bracket (40) radially outwardly so that the brake shoes engage the annular rim (63) on each of the wheels, the lever (70) being pivotally mounted in the periphery of the horn member (11) adjacent the slot (29) therein, said lever having an integral cam (74, 75) slidably engaging the brake shoe bracket (40) against the biasing force of the spring (66) to release the brake shoes from engagement with the wheel rims.

6. The caster assembly of claim 5, characterized in that the wheels (12, 13) have annular recesses (57, 58) in the sides thereof facing the horn member (11), said annular rim (63) being an axial extension of the outermost portion of the wheels and defining a portion of each of the annular recesses, and said brake shoes (51, 52) extending within the annular recesses in the wheels a relatively short distance compared to the axial width of the wheels.

7. The caster assembly of claim 5, characterized in that the lever cam has a flat surface (74) engageable with the brake shoe bracket (40) to hold the bracket and the brake shoes in a disengaged position.

8. The caster assembly of claim 6, characterized in that the radial slot (29) extends axially completely through the horn member (11) terminating short of its periphery, and having a radial pivot slot (48) in the periphery thereof adjacent the other radial slot and communicating therewith, the lever (70) being pivotally mounted in the pivot slot and having a cam portion (74, 75) projecting in the other radial slot, the bracket (40) being slidably mounted for radial movement in the horn member slot (29), the two brake shoes (51, 52) being selectively engageable with the cylindrical drum surfaces (61) on the wheels, and the spring (66) in the slot biasing the bracket radially outwardly engaging the brake shoes with the drum surfaces on the wheels, said lever (70) being positioned so that the cam upon pivotal movement of the lever engages and shifts the bracket radially inwardly disengaging the brake shoes from the drum surfaces on the wheels.

## Patentansprüche

1. Zwei Schwenkrollen aufweisende Anordnung (10) mit einem Tragkörper (11), der mit einem abzustützenden Gegenstand verbindbar ist, und mit zwei Rollen (12, 13), die auf je einer Seite des Tragkörpers drehbar gelagert sind und außen eine Lauffläche (64) und radial einwärts von der Lauffläche eine Ringfläche (61) besitzen, gekennzeichnet, durch eine Bremsanordnung (28) zum Festlegen der Rollen (12, 13) an dem Tragkörper (11), wobei die Bremsanordnung einen Bremsbackenträger (40) besitzt, der in dem Tragkörper radial hin- und herbewegbar gelagert ist, ferner eine erste und eine zweite Bremsbacke (51, 52), die von dem Bremsbackenträger getragen werden und wahlweise an die Ringflächen (61) der Rollen (12, 13) anstellbar sind, eine in dem Tragkörper angeordnete Federeinrichtung (66), die den Bremsbackenträger in einer Richtung vorbelastet, die dem Anstellen der ersten und der zweiten Bremsbacke (51, 52) an die Ringflächen (61) der Rollen (12, 13) entspricht, wobei der Bremsbackenträger und die Federeinrichtung so angeordnet sind, daß unabhängig von dem Verschleiß und der Form der Felgen die Bremskraft gleichmäßig auf die Rollen aufgeteilt wird, und in dem Tragkörper eine Hebeleinrichtung (70) zum Verschieben des Bremsbackenträgers gegen die Vorbelastungskraft der Federeinrichtung vorgesehen ist.

2. Schwenkrollenanordnung nach Anspruch 1, dadurch gekennzeichnet, daß die Federeinrichtung (66) den Bremsbackenträger (40) radial auswärts vorbelastet und die Hebeleinrichtung (70) den Bremsbackenträger radial einwärtsschiebt.

3. Schwenkrollenanordnung nach Anspruch 1 oder 2, dadurch gekennzeichnet, daß die Ringfläche (61) jeder der Rollen (12, 13) eine radial einwärtsgekehrte Ringfläche ist, daß die Federeinrichtung (66) in einem radialen Langloch (29) des Tragkörpers (11) angeordnet ist und die Bremsbacken (51, 52) an die Ringflächen der Rollen anzustellen trachtet, und daß die Hebeleinrichtung (70) geeignet ist, die Bremsbacken von den Ringflächen der Rollen abzurücken.

4. Schwenkrollenanordnung nach Anspruch 1, dadurch gekennzeichnet, daß der Bremsbackenträger (40) U-förmig ist und seine Schenkel (42, 43) sich radial auswärts erstrecken.

5. Schwenkrollenanordnung nach Anspruch 4, dadurch gekennzeichnet, daß das in dem Tragkörper (11) ausgebildete, radiale Langloch (29) knapp vor dem Umfang des Tragkörpers endet, daß der U-förmige Bremsbackenträger in dem Langloch (29) gleitend gelagert ist und die im Abstand voneinander angeordneten, auswärtsgekehrten Bremsbacken (51, 52) trägt, daß die Feder (66) in dem Langloch (29) des Tragkörpers (11) angeordnet ist und den Bremsbackenträger (40) radial auswärts vorbelastet, so daß die Bremsbacken an der ringförmigen Felge (63) jeder der Rollen angreifen, und der Hebel (70) im Umfang des Tragkörpers (11) in Bereich des darin vorgesehenen Langloches (29) schwenkbar gelagert ist und einstückig mit einer Nocke (74, 75) ausgebildet ist, die mit dem Bremsbackenträger (40) in Gleitberührung steht und entgegen der Vorbelastungskraft der Feder (66) an ihm angreift, um die Bremsbacken von den Rollenfelgen abzurücken.

6. Schwenkrollenanordnung nach Anspruch 5, dadurch gekennzeichnet, daß die Rollen (12, 13) in ihren dem Tragkörper (11) zugekehrten Seitenflächen mit Ringnuten (57, 58) ausgebildet sind, daß die ringförmigen Felgen (63) axiale Fortsätze des äußersten Teils der Rollen bilden und einen Teil je einer der Ringnuten begrenzen, und daß sich die Bremsbacken (51, 52) in die Ringnuten der Rollen über eine Strecke erstrecken, die kleiner ist als die axiale Breite der Rollen.

7. Schwenkrollenanordnung nach Anspruch 5, dadurch gekennzeichnet, daß die Nocke des Hebels eine ebene Fläche (74) besitzt, die an den Bremsbackenträger (40) anstellbar ist, um ihn und die Bremsbacken in einer abgerückten Stellung zu halten.

8. Schwenkrollenanordnung nach Anspruch 6, dadurch gekennzeichnet, daß das radiale Langloch (29) durch den Tragkörper (11) axial durchsetzt und knapp vor seinem Umfang endet, daß der Tragkörper in seinem Umfang ein zur Schwenklagerung dienendes radiales Langloch (48) besitzt, das im Bereich des anderen radialen Langloches angeordnet ist und mit ihm in Verbindung steht, daß der Hebel (70) in dem zur Schwenklagerung dienenden Langloch schwenkbar gelagert ist und einen nockenförmigen Teil (74, 75) besitzt, der das andere radiale Langloch vorsteht, daß der Bremsbackenträger (40) in dem Langloch (29) des Tragkörpers gleitend gelagert und darin radial verschiebbar ist, daß die beiden Bremsbacken (51, 52) wahlweise an die zylindrischen Trommelflächen (61) der Rollen anstellbar sind, daß die in dem Langloch vorgesehene Feder (66) den Bremsbackenträger radial auswärts belastet und die Bremsbacken an die Trommelflächen der Rollen anstellt, und daß der Hebel (70) so angeordnet ist, daß bei einem Verschwenken des Hebels die Nocke an dem Bremsbackenträger angreift und ihn radial einwärts verschiebt, so daß die Bremsbacken von den Trommelflächen der Rollen angerückt werden.

**Revendications**

1. Un dispositif de roulement (10) à double roue comportant un élément porteur (11) en forme de corne, adapté pour être relié à un article à supporter, et une paire de roues (12, 13) reliées chacune de façon tournante, de chaque côté de l'élément porteur, et présentant une surface de roulement extérieure (64) et une surface annulaire (61) disposée radialement, vers l'intérieur, sur la surface de roulement, caractérisé par un ensemble de freinage (28) pour bloquer les roues (12, 13) sur l'élément porteur (11), comportant un support de sabots de frein (40), monté de façon à exécuter radialement un mouvement alternatif dans l'élément porteur, un premier et un second sabot de frein (51, 52) portés par le support de sabots de manière à entrer sélectivement en contact avec les surfaces annulaires (61) des roues (12, 13), un ressort (66) prévu dans l'élement porteur pour pousser le support de sabots dans la direction d'application des premier et second sabots de frein (51, 52) contre les surfaces annulaires (61) des roues (12, 13), l'agencement du support de sabots et du ressort étant tel qu'une force de freinage soit distribuée de façon égale entre les roues, indépendamment de l'usure ou de la forme de jante, et un levier (70) prévu dans l'élément porteur pour déplacer le support de sabots de frein en opposition à la force de poussée du ressort.

2. Le dispositif de roulement de la revendication 1, caractérisé en ce que le ressort (66) pousse le support de sabots de frein (40) dans une direction orientée radialement vers l'extérieur, et le levier (70) déplace le support de sabots de frein dans une direction orientée radialement vers l'intérieur.

3. Le dispositif de roulement de la revendication 1 ou 2, caractérisé en ce que la surface annulaire (61) de chacune des roues (12, 13) est une surface annulaire dirigée radialement vers l'intérieur, ledit ressort (66) étant positionné dans une fente radiale (29) ménagée dans l'élément porteur (11), pour appliquer les sabots de frein (51, 52) contre les surfaces annulaires des roues, et en ce que le levier (70) est positionné de façon à écarter les sabots de frein des surfaces annulaires de roues.

4. Le dispositif de roulement de la revendication 1, caractérisé en ce que le support de sabots de frein (40) a une configuration en forme de U dont les branches (42, 43) s'étendent radialement vers l'extérieur.

5. Le dispositif de roulement de la revendication 4, caractérisé en ce que la fente radiale (29) est formée dans l'élément porteur (11) en se terminant à courte distance de la périphérie de l'élément porteur, le support en forme de U est monté de façon coulissante dans la fente (29) et porte les sabots de frein (51, 52) espacés l'un de l'autre et dirigés vers l'extérieur, le ressort (66) est placé dans la fente (29) ménagée dans l'élément porteur (11) et pousse le support (40) radialement vers l'extérieur de telle sorte que les sabots de frein entrent en contact avec la jante annulaire (63) de chacune des roues, le levier (70) est monté de façon pivotante dans la périphérie de l'élément porteur (11), en étant adjacent à la fente (29) de ce dernier, ledit levier comportant une came (74, 75) entrant en contact glissant avec le support de sabots de frein (40) en opposition à la force de poussée du ressort (66), pour écarter les sabots de frein du contact avec les jantes de roues.

6. Le dispositif de roulement de la revendication 5, caractérisé en ce que les roues (12, 13) comportent des évidements annulaires (57, 58) ouverts du côté dirigé vers l'élément porteur (11), ladite jante annulaire (63) constituant un prolongement axial de la partie complètement extérieure des roues et définissant une partie de chacun des évidements annulaires, et lesdits sabots de frein (51, 52) s'étendant à l'intérieur des évidements annulaires des roues sur une distance relativement courte par comparaison à la largeur axiale des roues.

7. Le dispositif de roulement de la revendication 5, caractérisé en ce que la came de levier comporte une surface plane (74) pouvant entrer en contact avec le support de sabots de frein (40) pour maintenir le support et les sabots de frein dans une position de desserrage.

8. Le dispositif de roulement de la revendication 6, caractérise en ce que la fente radiale (29) s'étend axialement complètement au travers de l'élément porteur (11) en se terminant à courte distance de sa périphérie, et elle comporte dans sa périphérie une fente radiale de pivot (48) qui est adjacente à l'autre fente radiale et qui communique avec elle, le levier (70) étant monté de façon pivotante dans la fente de pivot et comportant une partie formant came (74, 75) faisant saillie dans l'autre fentre radiale, le support (40) étant monté de façon à pouvoir coulisser radialement dans la fente (29) de l'élément porteur, les deux sabots de frein (51, 52) pouvant être appliqués sélectivement contre les surfaces cylindriques formant tambour (61) des roues, et le ressort (66) placé dans la fente pouvant le support de sabots radialement vers l'extérieur de façon à appliquer les sabots de frein contre les surfaces de tambour des roues, ledit levier (70) étant positionné de manière que la came, lors d'un mouvement de pivotement du levier, entre en contact avec le support et le déplace radialement vers l'intérieur pour écarter les sabots de frein des surfaces de tambour des roues.

FIG.1

FIG.2

FIG.3

FIG.4

FIG.5

FIG.6

2

FIG.7

FIG.8

FIG.9